## Europäisches Patentamt
## European Patent Office
## Office européen des brevets

(11) Veröffentlichungsnummer: **0 236 972 B1**

(12) # EUROPÄISCHE PATENTSCHRIFT

(45) Veröffentlichungstag der Patentschrift: **20.03.91**

(51) Int. Cl.5: **C05G 1/08, C05G 5/00**

(21) Anmeldenummer: **87103195.1**

(22) Anmeldetag: **07.03.87**

(54) **Verfahren zur Herstellung von Ammoniumnitrat und Calciumcarbonat enthaltenden Düngemitteln.**

(30) Priorität: **11.03.86 DE 3607994**

(43) Veröffentlichungstag der Anmeldung:
**16.09.87 Patentblatt 87/38**

(45) Bekanntmachung des Hinweises auf die
Patenterteilung:
**20.03.91 Patentblatt 91/12**

(84) Benannte Vertragsstaaten:
**AT BE DE FR GB IT NL SE**

(56) Entgegenhaltungen:
**DE-A- 3 241 443**

(73) Patentinhaber: **BASF Aktiengesellschaft
Carl-Bosch-Strasse 38
W-6700 Ludwigshafen(DE)**

(72) Erfinder: **Nitzschmann, Robert E.,Dr.
Anselm-Feuerbach-Strasse 6
W-6710 Frankenthal(DE)**
Erfinder: **Zapp, Karl Heinz, Dr.
Wanderstrasse 11
W-6700 Ludwigshafen(DE)**
Erfinder: **Pottgiesser, Hermann, Dr.
Irisstrasse 21
W-6700 Ludwigshafen(DE)**

Rank Xerox (UK) Business Services

## Beschreibung

Es ist bekannt, Ammoniumnitrat und Calciumcarbonat enthaltende Düngemittel durch Vermischen von Ammoniumnitratschmelzen mit fein gemahlenem und getrocknetem Calciumcarbonat herzustellen (DE-C-691 686, Process Technologies for Nitrogen Fertilizers, U.S. Department of Commerce, 1978, Seiten 51-53). Je nach der zugesetzten Calciumcarbonatmenge enthält man Düngemittel mit variierendem N-Gehalt.

Als Calciumcarbonat kann entweder natürlicher, gemahlener und getrockneter Kalkstein oder auch gefälltes Calciumcarbonat eingesetzt werden. Dieses gefällte Calciumcarbonat wird aus Calciumnitrattetrahydrat ($Ca(NO_3)_2 \cdot 4H_2O$) gewonnen, wie es in erheblichen Mengen beim Salpetersäureaufschluß von Rohphosphaten nach dem Odda-Verfahren anfällt. Dieses Calciumnitrattetrahydrat wird mit Ammoniak und Kohlendioxid bzw. Ammoniumcarbonat gemäß der Gleichung

$$Ca(NO_3)_2 \cdot 4H_2O + 2NH_2 + CO_2 \rightarrow CaCO_3 + 2NH_4NO_3 + 3H_2O$$

zu Calciumcarbonat und Ammoniumnitrat umgewandelt. Nach der Umsetzung wird die etwa 65%ige $NH_4NO_3$-Lösung vom gefällten Calciumcarbonat getrennt. Die Ammoniumnitratlösung wird eingedampft, während das Calciumcarbonat gewaschen und getrocknet wird. Das so behandelte Calciumcarbonat wird dann der aufkonzentrierten Ammoniumnitratlösung zugesetzt und die erhaltene Maische durch Granulieren oder Prillen in das körnige Düngemittel übergeführt (vgl. Ullmanns Encyklopädie der Technischen Chemie, 4. Auflage, Band 7, Seiten 518-519). Das ausgewaschene und getrocknete Calciumcarbonat besitzt einen Feuchtigkeitsgehalt von weniger als 0,05 Gew.-% und einen Ammoniumnitratgehalt von etwa 0,15 Gew.-% (IFA Technical Conference, Paris, 1984, Preprints S. 18-11 bis 18-13, ISMA Technical Conference, 1976, Den Haag, Preprints S. 224-226). Das Auswaschen und Trocknen stellen aufwendige Schritte dar, da das Auswaschen in mehreren Stufen durchgeführt werden muß und die Trocknung des filterfeuchten Gutes, das etwa 13 Gew.-% Feuchtigkeit enthält, energetisch aufwendig ist. Das beim Auswaschen anfallende Wasser enthält Ammoniumnitrat und es muß aus Gründen des Umweltschutzes ebenfalls mit Energieaufwand aufgearbeitet werden. Auf der anderen Seite sollen durch diese aufwendigen Schritte des Auswaschens und Trocknens die beim Eintragen des Calciumcarbonates in die Ammoniumnitratschmelze sonst auftretenden Störungen durch starkes Schäumen vermieden werden. Außerdem werden bei Verarbeitung von feuchtem, ausgewaschenem Kalk, der nach dem oben beschriebenen Verfahren erhalten wird, wenig abriebfeste gekörnte Produkte erhalten.

Der vorliegenden Erfindung lag die Aufgabe zugrunde, ein Verfahren zur Herstellung von Ammoniumnitrat und Calciumcarbonat enthaltenden gekörnten Düngemitteln bereitzustellen, bei dem Calciumcarbonat, das bei der Umsetzung von Calciumnitrat mit Ammoniak und Kohlendioxid oder Ammoniumcarbonat in wäßriger Lösung erhalten worden ist, in Schmelzen von Ammoniumnitrat eingetragen wird und die erhaltenen Maischen in die gekörnte Form übergeführt werden, bei dem diese Nachteile nicht auftreten und bei dem man auf die bisher erforderlichen Wasch- und Trockenvorgänge zumindest teilweise verzichten kann und gleichzeitig ein Produkt erhält, das den an ihn gestellten Anforderungen bezüglich Abriebfestigkeit genügt.

Es wurde gefunden, daß diese Aufgabe dadurch gelöst werden kann, daß man ein Calciumcarbonat einsetzt, das Ammoniumnitrat und Wasser enthält mit der Maßgabe, daß die Summe der Ammoniumnitrat- und Wassergehalte 25 Gew.-% nicht übersteigt, der Wassergehalt 4 bis 11 Gew.-% und der Ammoniumnitratgehalt mindestens 1 Gew.-% beträgt.

Ein Calciumcarbonat, das den genannten Anforderungen entspricht, kann entweder direkt bei der Umwandlung von Calciumnitrat in wäßrigen Lösungen mit Ammoniak und Kohlendioxid oder Ammoniumcarbonat und Abfiltrieren erhalten werden oder man benötigt nur vergleichsweise geringe Mengen an Waschwasser oder Ammoniumnitratlösungen, um die erfindungsgemäßen Wasser-und Ammoniumnitratgehalte einzustellen.

Überraschenderweise tritt beim Eintragen eines solchen Calciumcarbonates in die Ammoniumnitratschmelze kein das Ansetzen der Maische verhinderndes Schäumen auf und das durch Prillen oder Granulieren erhaltene Ammoniumnitrat und Calciumcarbonat enthaltende Düngemittel entspricht mechanisch und chemisch den gestellten Anforderungen, d.h. es ist abriebfest und enthält nur geringe Mengen an rückgebildetem Calciumnitrat. Vorzugsweise setzt man ein Calciumcarbonat ein, das einen Ammoniumnitratgehalt von 8 bis 18 Gew.-% und einen Wassergehalt von 6 bis 10 Gew.-% enthält.

Zur Herstellung der Düngemittel geht man in üblicher Weise von Ammoniumnitratschmelzen aus, die einen $NH_4NO_3$-Gehalt von 95-99 Gew.-% aufweisen. In diese Schmelze wird das Wasser- und ammoniumnitrathaltige Calciumcarbonat eingetragen und die erhaltene Maische, deren Temperatur zweckmäßig 140 bis 150°C beträgt, wird dann in an sich bekannter Weise z.B. durch Prillen oder Granulieren in die gekörnte Form übergeführt. Es ist vorteilhaft, zur Vermeidung eines gegebenenfalls noch auftretenden geringen Schäumens zusätzlich anorganische Sulfate, wie Ammonsulfat, Aluminiumsulfat, Calciumsulfat, Eisensulfat, Kaliumsulfat und Natriumsulfat in Mengen bis zu 1,0 Gew.-%, bezogen auf die Gesamtmenge der Maische, zuzusetzen. Dieser Zusatz kann vor, während oder nach der Einarbeitung des Calciumcarbonats erfolgen. Je nach der gewünschten Zusammensetzung des Produktes werden in die Ammoniumnitratschmelze 3 bis 40 Gew.-% Calciumcarbonat (jeweils bezogen auf Trockensubstanz) eingetragen. Die in den folgenden Beispielen genannten Prozentangaben beziehen sich, falls nicht anders vermerkt, auf Gewichtsprozente.

Beispiel 1

Stündlich werden 70 t einer 98%igen Ammoniumnitratschmelze, die 90 kg Magnesiumsulfat enthält, und 22 t Calciumcarbonat, das 8,2 % Ammoniumnitrat und 7,4 % $H_2O$ enthält, ohne störendes Schäumen zu einer Maische mit einer Temperatur von 140°C verarbeitet. Diese Maische wird in einer Trommel granuliert und anschließend in nachgeschalteten Aggregaten gekühlt, gesiebt und mit einem Antibackmittel versehen. Das Fertigprodukt enthält 27,50% N und 0,2% $H_2O$. Elektronenmikroskopische Aufnahmen von Granulatbruchflächen zeigen, daß Calciumcarbonat im Ammoniumnitrat der Granalien mit intensiver Haftung fest eingebettet ist.

Beispiel 2

Stündlich werden 40,1 t einer 98,2%igen Ammoniumnitratschmelze, die 85 kg Aluminiumsulfat enthält, und 11,6 t mit Wasser ausgewaschenes, filterfeuchtes Calciumcarbonat, das 1,6% Ammoniumnitrat und 9,6% $H_2O$ enthält, zu einer Maische mit einer Temperatur von 144°C verarbeitet. Die Maische wird, wie in Beispiel 1 beschrieben, granuliert und das Granulat gekühlt, gesiebt und mit einem Antibackmittel versehen. Das Fertigprodukt enthält 27,55 % N und 0,23 % $H_2O$.

Beispiel 3

Es werden stündlich 20,2 t einer 97,6%igen Ammoniumnitratschmelze und 1,1 t Calciumcarbonat, das 17,6 % Ammoniumnitrat und 7,1 % $H_2O$ enthält, zu einer Maische mit einer Temperatur von 145°C verarbeitet. Diese Maische wird auf einem Drehteller granuliert und die Granalien anschließend getrocknet, gekühlt, gesiebt und mit einem Antibackmittel versehen. Das abriebfeste Fertigprodukt enthält 33.5 % N und 0,25 % $H_2O$.

## Ansprüche

1. Verfahren zur Herstellung von Ammoniumnitrat und Calciumcarbonat enthaltenden gekörnten Düngemitteln durch Eintragen von Calciumcarbonat, das bei der Umsetzung von Calciumnitrat mit Ammoniak und Kohlendioxid in wäßriger Lösung erhalten worden ist, in Schmelzen von Ammoniumnitrat und Überführen der erhaltenen Maischen in die gekörnte Form, dadurch gekennzeichnet, daß man ein Calciumcarbonat einsetzt, das Ammoniumnitrat und Wasser enthält, mit der Maßgabe, daß die Summe der Ammoniumnitrat- und Wassergehalte 25 Gew.-% nicht übersteigt, der Wassergehalt 4 bis 11 Gew.-% und der Ammoniumnitratgehalt mindestens 1 Gew.-% beträgt.

2. Verfahren nach Anspruch 1, dadurch gekennzeichnet, daß der Wassergehalt 6 bis 10 Gew.-% und der Ammoniumnitratgehalt 8 bis 18 Gew.-% beträgt.

3. Verfahren nach Ansprüchen 1 bis 2, dadurch gekennzeichnet, daß man zusätzlich anorganische Sulfate in die Schmelzen einträgt.

## Claims

1. A process for the preparation of a granular fertilizer containing ammonium nitrate and calcium carbonate by introducing calcium carbonate, obtained by converting calcium nitrate with ammonia and carbon dioxide in an aqueous solution, into a melt of ammonium nitrate and converting the resulting slurry into granular form, wherein the calcium carbonate used contains ammonium nitrate and water, with the proviso that the sum of the ammonium nitrate and water contents does not exceed 25% by weight, the water content is from 4 to 11% by weight and the ammonium nitrate content is not less than 1% by weight.

2. A process as claimed in claim 1, wherein the water content is from 6 to 10% by weight and the ammonium nitrate content is from 8 to 18% by weight.

3. A process as claimed in claim 1 or 2, wherein an inorganic sulfate is additionally introduced into the melt.

## Revendications

1. Procédé de fabrication d'engrais granulés contenant du nitrate d'ammonium et du carbonate de calcium, par introduction de carbonate de calcium, qui a été obtenu par réaction de nitrate de calcium avec de l'ammoniac et de l'anhydride carbonique en solution aqueuse, dans des masses fondues de nitrate d'ammonium et par transformation sous forme granulée des mélanges obtenus, caractérisé en ce qu'on utilise un carbonate de calcium qui contient du nitrate d'ammonium et de l'eau, étant spécifié que la somme des teneurs en nitrate d'ammonium et en eau ne dépasse pas 25% en poids, que la teneur en eau se situe entre 4 et 11% en poids et que la teneur en nitrate d'ammonium s'élève au moins à 1% en poids.

2. Procédé selon la revendication 1, caractérisé en ce que la teneur en eau est comprise entre 6 et 10% en poids et la teneur en nitrate d'ammonium est comprise entre 8 et 18% en poids.

3. Procédé selon la revendication 1 ou 2, caractérisé en ce qu'on introduit en outre des sulfates inoraniques dans les masses fondues.